# DEMANDE DE BREVET EUROPEEN

(11) **EP 0 539 286 A1**
(43) Date de publication de la demande: **28.04.1993**
(21) Numéro de dépôt: 92402870.7
(22) Date de dépôt: 21.10.1992
(51) Int. Cl.: B65G 47/74, B65G 47/90

(54) **Procédé et dispositif de transfert d'objets entre deux transporteurs**

(30) Priorité: 22.10.1991 FR 9113028
(71) Demandeur: MECANIQUE GENERALE IVOL ET CIE, F-38210 Vourey (FR)
(72) Inventeur: Bazzoli, Jacques, F-38160 Chatte (FR); Merlin, André, F-38120 Tullins (FR)
(74) Mandataire: Casalonga, Axel

(57) **Abrégé**

Procédé et dispositif de transfert d'objets tels que des boites de conditionnement, d'une station d'arrivée à une station de reprise au cours d'un processus de transport desdits objets, consistant à amener des moyens porteurs tels qu'une fourche (23) à la station d'arrivée à une position de prise, et à engager ces moyens porteurs en dessous d'au moins une partie d'au moins un objet (24) posé sur un premier moyen de transport (2) par déplacement relatif de l'objet par rapport aux moyens porteurs dans la direction de déplacement de ce moyen de transport, à écarter les moyens porteurs du premier moyen de transport (2) pour qu'ils prennent l'objet, à déplacer les moyens porteurs portant l'objet de la station d'arrivée vers la station de reprise, et, à la station de reprise, à amener les moyens porteurs (23) jusqu'à une position de dépose pour qu'ils posent l'objet qu'ils portent sur un second moyen de transport (4) et dégager l'objet (24) par déplacement relatif de l'objet par rapport aux moyens porteurs dans la direction de déplacement de ce second moyen de transport.

## Description

La présente invention concerne un procédé et un dispositif de transfert d'objets tels que des boîtes de conditionnement d'un moyen de transport sur un autre moyen de transport tels que des transporteurs sans fin à défilement continu.

Selon un premier objet de l'invention, le procédé de transfert d'objets tels que des boites de conditionnement, d'une station d'arrivée à une station de reprise au cours d'un processus de transport desdits objets, est tel qu'il consiste à amener des moyens porteurs à la station d'arrivée à une position de prise, et à engager ces moyens porteurs en dessous d'au moins une partie d'au moins un objet posé sur un premier moyen de transport par déplacement relatif de l'objet par rapport aux moyens porteurs dans la direction de déplacement de ce moyen de transport, à écarter les moyens porteurs du premier moyen de transport pour qu'ils prennent l'objet, à déplacer les moyens porteurs portant l'objet de la station d'arrivée vers la station de reprise, et, à la station de reprise, à amener les moyens porteurs jusqu'à une position de dépose pour qu'ils posent l'objet qu'ils portent sur un second moyen de transport et dégager l'objet par déplacement relatif de l'objet par rapport aux moyens porteurs dans la direction de déplacement de ce second moyen de transport.

Le procédé selon l'invention peut avantageusement consister, à la station d'arrivée, à immobiliser les moyens porteurs, l'objet, pour s'engager sur ces moyens porteurs, étant déplacé par le premier moyen de transport.

Le procédé selon l'invention peut avantageusement consister, à la station de reprise, à immobiliser les moyens porteurs, l'objet, pour se dégager de ces moyens porteurs, étant déplacé par le second moyen de transport.

Le procédé selon l'invention peut avantageusement consister à modifier l'inclinaison des moyens porteurs de telle sorte que la face inférieure de l'objet, pris par ces moyens porteurs, soit parallèle à la face d'appui du premier moyen de transport et du second moyen de transport respectivement à la station d'arrivée et à la station de reprise.

Selon l'invention, le procédé peut consister à faire obstacle à l'avancement d'un nouvel objet en amont de la station d'arrivée au moins tant que l'objet précédent n'est pas enlevé et tant que les moyens porteurs ne sont pas à la station d'arrivée à leur position de prise.

Selon une variante de l'invention, le procédé peut consister à prendre l'objet par en dessous en engageant les moyens porteurs dans des évidements inférieurs de l'objet, ces moyens porteurs étant, à leur position de prise et à leur position de dépose, respectivement au dessus de la surface supérieure du premier moyen de transport et du second moyen de transport.

Selon un autre objet de l'invention un dispositif de transfert notamment pour la mise en oeuvre du procédé est proposé. Ce dispositif comprend de préférence un premier moyen de transport à défilement continu et un second moyen de transport à défilement continu, des moyens porteurs qui comprennent une fourche, et des moyens pour porter cette fourche et la déplacer entre la position de prise et la position de dépose précitées dans lesquelles ses branches s'étendent, à cette position de prise dans le sens opposé au sens de déplacement du premier moyen de transport et, à cette position de dépose dans le sens du déplacement du second moyen de transport.

Le dispositif selon l'invention peut avantageusement comprendre des moyens d'arrêt situés en amont de la station d'arrivée et des moyens pour déplacer ces moyens d'arrêt entre une position dans laquelle ils s'étendent en travers du premier moyen de transport pour stopper le déplacement de l'objet entraîné par ce dernier et une position escamotée.

Dans une exécution préférée de l'invention, les moyens portant et déplacant ladite fourche comprennent un chariot monté mobile longitudinalement sur un châssis monté mobile verticalement sur un châssis fixe ainsi que des moyens d'entraînement de ce chariot et des moyens d'entraînement de ce châssis mobile.

Selon l'invention, ledit châssis mobile comprend de préférence un second chariot sur lequel est monté mobile le chariot précité et un troisième chariot monté mobile sur ledit châssis fixe ainsi que des moyens d'entraînement de ce second chariot et des moyens d'entraînement de ce troisième chariot.

Selon l'invention, ladite fourche est de préférence montée pivotante verticalement sur le premier chariot précité, des moyens d'entraînement de cette fourche étant prévus.

Selon l'invention, l'écartement entre les branches de ladite fourche est de préférence réglable.

La présente invention sera mieux comprise à l'étude d'un dispositif de transfert d'objets tels que des boîtes de conditionnement depuis un transporteur à défilement continu jusqu'à un autre transporteur à défilement continu, décrit à titre d'exemple non limitatif et illustré schématiquement par le dessin annexé sur lequel :
- la figure 1 représente une vue latérale d'un dispositif de transfert selon l'invention, en position de prise ;

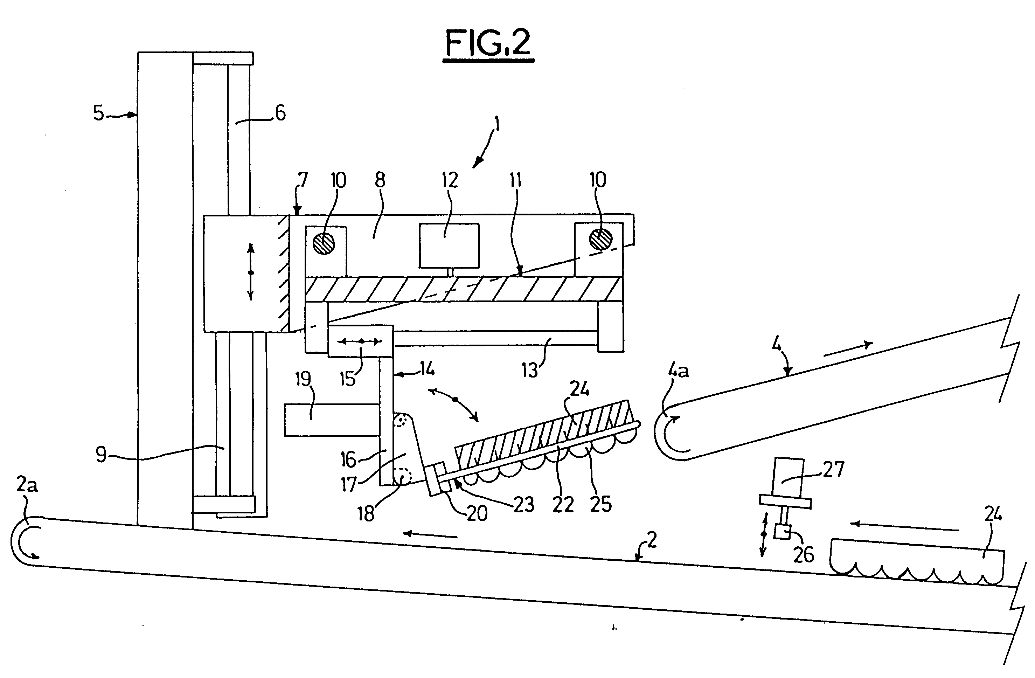

- la figure 2 représente une vue latérale du dispositif de transfert de la figure 1, en position intermédiaire de transfert ;

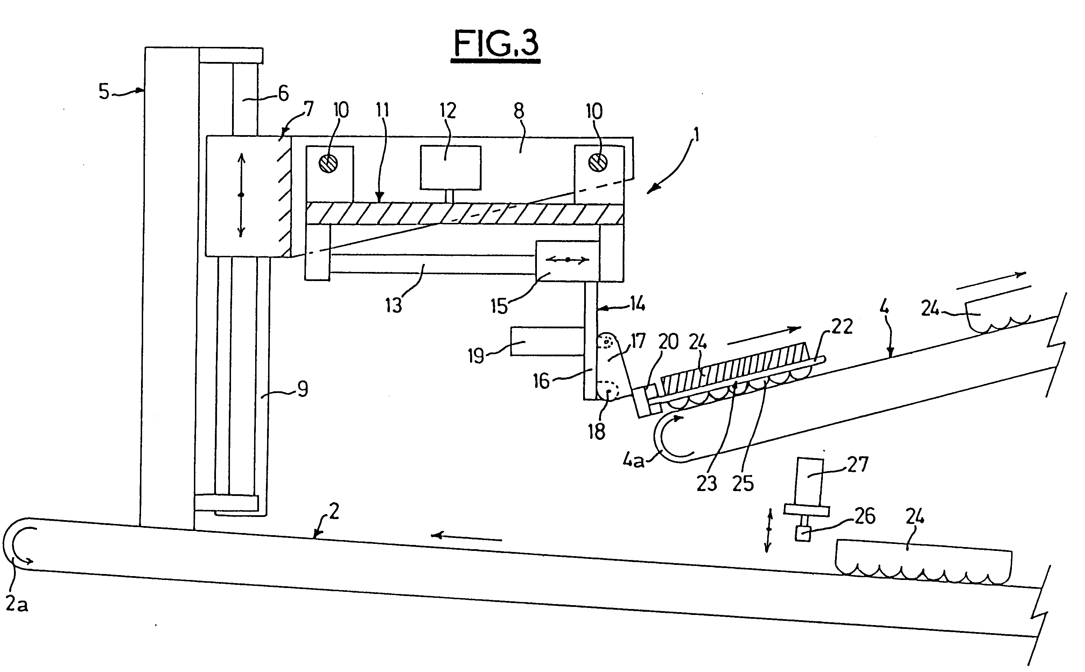

- la figure 3 représente une vue latérale du dispositif de transfert de la figure 1, en position de dépose ;

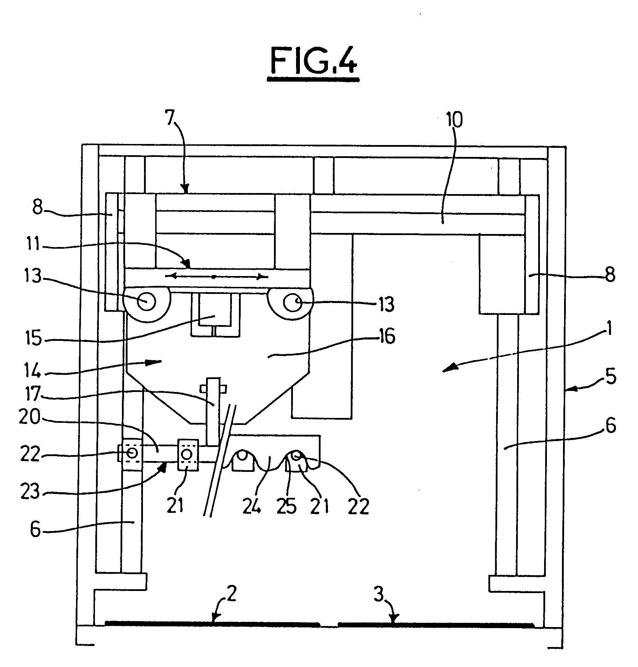

- la figure 4 représente une vue longitudinale du dispositif de transfert précité ;

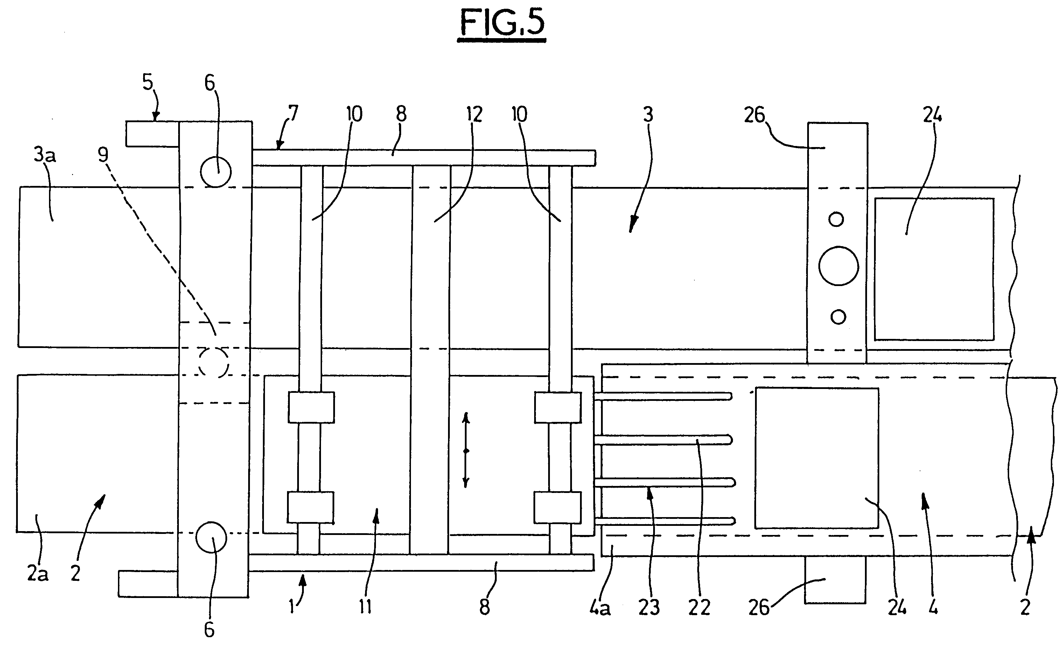

- et la figure 5 représente une vue de dessus du dispositif de transfert précité.

Le dispositif de transfert représenté, repéré d'une manière générale par la référence 1, est associé à une installation de transport d'objets qui comprend, dans l'exemple, deux transporteurs d'amenée 2 et 3 à bande sans fin légèrement ascendant en direction de leur extrémité 2a et 3a, disposés l'un à côté de l'autre, ainsi qu'un transporteur de reprise ascendant 4 à bande sans fin qui est disposé au-dessus et à distance du transporteur 2.

Dans l'exemple représenté, le transporteur de reprise 4 est incliné sensiblement à 20°, son extrémité inférieure 4a étant située au-dessus du transporteur 2 et à distance d'une extrémité 2a du transporteur 2, laissant ainsi un espace libre au-dessus de la partie d'extrémité du transporteur 2 adjacente à son extrémité 2a, cette partie d'extrémité constituant une station d'arrivée.

Le dispositif de transfert 1, qui est disposé dans l'espace situé au-dessus cette station d'arrivée, comprend, à distance de l'extrémité 4a du transporteur de reprise 4, un châssis fixe 5 qui présente deux colonnes verticales 6 situées latéralement aux transporteurs 2 et 3 et sur lesquels est monté coulissant verticalement un chariot 7 qui présente deux bras longitudinaux 8 qui s'étendent de part et d'autre des transporteurs 2 et 3 en direction du transporteur de reprise 4. Pour entraîner le chariot 7 verticalement le long des colonnes 6, il est prévu dans l'exemple un vérin 9.

Les bras 8 du chariot 7 sont reliés par deux traverses de guidage 10 espacées horizontalement sur lesquelles est monté un chariot 11 susceptibles d'être entrainé le long de ces traverses de guidage 10, transversalement aux transporteurs 2 et 3, par un vérin 12.

Le chariot 11 porte, par en-dessous, deux longerons de guidage 13 longitudinaux et horizontaux sur lesquels est monté un chariot 14 déplaçable le long de ces longerons grâce à un vérin 15.

Ce chariot 14 présente un bras vertical 16 qui s'étend vers le bas et sur l'extrémité inférieure duquel est monté pivotant un berceau 17 par l'intermédiaire d'un axe transversal 18, ce berceau 17 étant susceptible d'être pivoté autour de cet axe grâce à un vérin 19 porté par le bras 16.

Le berceau 17 porte, à son extrémité inférieure, une traverse horizontale 20 sur laquelle sont montés, dans l'exemple, quatre coulisseaux 21 qui portent des branches longitudinales 22. La traverse 20 et les branches parallèles 22 constituent une fourche 23 dont l'écartement entre les branches 22 est réglable le long de sa traverse 20.

Le dispositif de transfert 1 fonctionne et peut être utilisé de la manière suivante.

En activant les vérins 9, 12, 15 et 19, on peut amener le chariot 7, le chariot 11, le chariot 14 et la fourche 23, à la station d'arrivée précitée, à une position basse de prise telle que les branches de la fourche 23 s'étendent parallèlement et à faible distance de la face d'appui supérieure de la bande du transporteur 2, ces branches 23 s'étendant, à partir de sa traverse 20, dans le sens opposé au sens de déplacement de ce transporteur.

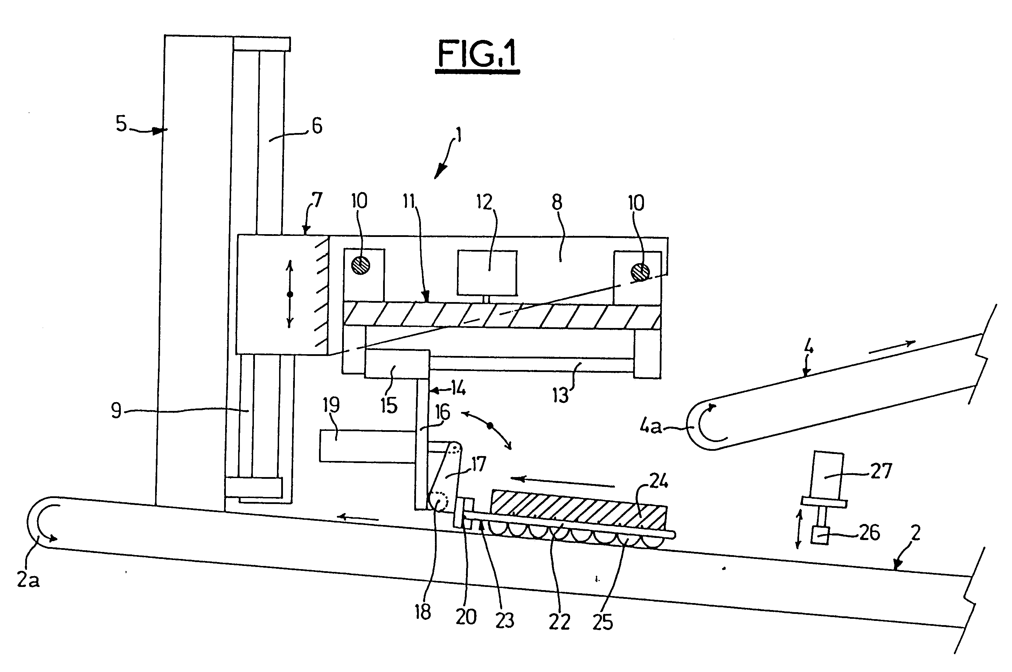

Dans cette position de prise visible sur la figure 1, les branches 22 de la fourche 23 peuvent s'engager en-dessous d'un objet 24 à transférer disposé sur le transporteur 2 et amener par ce dernier à la station d'arrivée précitée.

Dans l'exemple proposé, l'objet 24 est formé par une boîte de conditionnement d'oeufs qui comprend quatre rainures ou évidements longitudinaux sur sa face inférieure qui, lorsqu'elle est sur le transporteur 2, sont disposées longitudinalement en alignement avec les branches 22 de la fourche 23, l'écartement entre les branches 22 étant réglé en conséquence.

Lorsque l'objet 24 est disposé à cheval sur les branches 22 de la fourche 23 de préférence en butée contre sa traverse 20, on peut procèder à son soulèvement en actionnant le vérin 9 pour faire monter le chariot 7 le long des colonnes 6 et/ou en actionnant le vérin 19 pour faire pivoter la fourche 23 vers le haut.

Plus généralement pour transférer l'objet 24 du transporteur d'amenée 2 jusque sur le transporteur de reprise 4, on actionne le vérin 9 de manière à faire monter le chariot 7 jusqu'à ce que l'objet 24 se trouve en face de la partie inférieure du transporteur 4, légèrement au-dessus de son extrémité 4a et on actionne le vérin 19 de manière à faire pivoter la fourche 23 jusqu'à une position telle que ses branches 22 s'étendent parallèlement à la surface supérieure du transporteur 4. Lors de ce mouvement ascendant, l'objet 24 porté par la fourche 23 passe devant l'extrémité 4a du transporteur 4.

On déplace ensuite le chariot 14 d'une position reculée à une position avancée, en direction du transporteur 4 jusqu'à une station de reprise située au-dessus de la partie d'extrémité basse de ce transporteur, dans laquelle la fourche 23 vient occuper une position de dépose dans laquelle les branches 22 de la fourche 23 s'étendent parallèlement et à faible distance du transporteur 4 pour déposer sur ce dernier l'objet 24 qui se trouve alors emporté vers le haut par ce transporteur en mouvement.

Pour ramener le dispositif 1 à sa position de prise, on procède de manière inverse.

Pour aller prendre un objet 24 arrivant par le transporteur 3, on actionne le vérin transversal 12 de manière à déplacer transversalement le chariot 11 le long des traverses de guidage 10 du chariot 7 afin d'amener la fourche 23 au-dessus de ce transporteur 3.

On peut alors procéder de manière équivalente aux opérations précitées pour prendre un objet sur ce transporteur 3. Lorsque l'objet est saisi, on déplace le chariot 11 transversalement en sens opposé de manière à ramener la fourche 23 en vis-à-vis du transporteur 4 et on procède comme précédemment.

On voit en outre sur les figures qu'aux transporteurs 2 et 3 sont respectivement associées une traverse 26 située en amont de la station d'arrivée qui peut être actionnée par un vérin 27 entre une position basse dans laquelle elle forme une barrière empêchant un nouvel objet 24 d'avancer sur les transporteurs 2 et 3 et une position escamotée vers le haut dans laquelle l'objet 24 peut être emporté. Ainsi, il est possible de laisser passer uniquement un seul objet 24 susceptible d'atteindre la fourche 23 amenée à sa position de prise.

Bien entendu, le dispositif de transfert qui vient d'être décrit peut avantageusement être piloté et contrôlé par un appareillage électrique ou électronique soumis à différents détecteurs de fin de course non représentés associés aux différents chariots, à la fourche et aux barrières ainsi que des détecteurs de présence d'objets non représentés associés aux transporteurs et à la fourche.

Dans une autre exécution, on aurait pu prévoir au moins l'un des chariots pivotant afin de transférer un objet entre deux transporteurs décalés angulairement.

La présente invention ne se limite pas à l'exemple ci-dessus décrit. Bien des variantes de réalisation sont possibles sans sortir du cadre défini par les revendications annexées.

## Revendications

1. Procédé de transfert d'objets tels que des boites de conditionnement, d'une station d'arrivée à une station de reprise au cours d'un processus de transport desdits objets, caractérisé par le fait qu'il consiste :
- à amener des moyens porteurs (23) à la station d'arrivée à une position de prise, et à engager ces moyens porteurs en dessous d'au moins une partie d'au moins un objet (24) posé sur un premier moyen de transport (2) par déplacement relatif de l'objet par rapport aux moyens porteurs dans la direction de déplacement de ce moyen de transport,
- à écarter les moyens porteurs du premier moyen de transport (2) pour qu'ils prennent l'objet,
- à déplacer les moyens porteurs portant l'objet de la station d'arrivée vers la station de reprise,
- et, à la station de reprise, à amener les moyens porteurs (23) jusqu'à une position de dépose pour qu'ils posent l'objet qu'ils portent sur un second moyen de transport (4) et dégager l'objet (24) par déplacement relatif de l'objet par rapport aux moyens porteurs dans la direction de déplacement de ce second moyen de transport.

2. Procédé selon la revendication 1, caractérisé par le fait qu'il consiste, à la station d'arrivée, à immobiliser les moyens porteurs (23), l'objet, pour s'engager sur ces moyens porteurs, étant déplacé par le premier moyen de transport.

3. Procédé selon la revendication 1, caractérisé par le fait qu'il consiste, à la station de reprise, à immobiliser les moyens porteurs (23), l'objet, pour se dégager de ces moyens porteurs, étant déplacé par le second moyen de transport.

4. Procédé selon l'une quelconque des revendications précédentes, caractérisé par le fait qu'il consiste à modifier l'inclinaison des moyens porteurs (23) de telle sorte que la face inférieure de l'objet (24), pris par ces moyens porteurs, soit parallèle à la face d'appui du premier moyen de transport (2) et du second moyen de transport (4) respectivement à la station d'arrivée et à la station de reprise.

5. Procédé selon l'une quelconque des revendications précédentes, caractérisé par le fait qu'il consiste à faire obstacle à l'avancement d'un nouvel objet en amont de la station d'arrivée au moins tant que l'objet précédent (24) n'est pas enlevé et tant que les moyens porteurs ne sont pas à la station d'arrivée à leur position de prise.

6. Procédé selon l'une quelconque des revendications précédentes, caractérisé par le fait qu'il consiste à prendre l'objet (24) par en dessous en engageant les moyens porteurs (23) dans des évidements inférieurs (25) de l'objet, ces moyens porteurs étant, à leur position de prise et à leur position de dépose, respectivement au dessus de la surface supérieure du premier moyen de transport (2) et du second moyen de transport (4).

7. Dispositif de transfert pour la mise en oeuvre du procédé selon l'une quelconque des revendications précédentes, caractérisé par le fait qu'il comprend
- un premier moyen de transport (2) à défilement continu et un second moyen de transport à défilement continu,
- des moyens porteurs qui comprennent une fourche (23),
- des moyens (7, 11, 14) pour porter cette fourche et la déplacer entre la position de prise et la position de dépose précitées dans lesquelles ses branches s'étendent, à cette position de prise dans le sens opposé au sens de déplacement du premier moyen de transport et, à cette position de dépose dans le sens du déplacement du second moyen de transport.

8. Dispositif de transfert selon la revendication 7, caractérisé par le fait qu'il comprend des moyens d'arrêt (26) situés en amont de la station d'arrivée et des moyens (27) pour déplacer ces moyens d'arrêt entre une position dans laquelle ils s'étendent en travers du premier moyen de transport (2) pour stopper le déplacement de l'objet entraîné par ce dernier et une position escamotée.

9. Dispositif selon l'une des revendications 7 et 8, caractérisé par le fait que les moyens portant et déplacant ladite fourche comprennent un chariot (14) monté mobile longitudinalement sur un châssis (7, 11) monté mobile verticalement sur un châssis fixe ainsi que des moyens d'entraînement de ce chariot et des moyens d'entraînement de ce châssis mobile.

10. Dispositif selon la revendication 9, caractérisé par le fait que ledit châssis mobile comprend un second chariot (11) sur lequel est monté mobile le chariot précité (14) et un troisième chariot (7) monté mobile sur ledit châssis fixe ainsi que des moyens d'entraînement de ce second chariot et des moyens d'entraînement de ce troisième chariot.

11. Dispositif selon l'une quelconque des revendications 7 et 10, caractérisé par le fait que ladite fourche (23) est montée pivotante verticalement sur le premier chariot précité (14) des moyens d'entraînement de cette fourche étant prévus.

12. Dispositif selon l'une quelconque des revendications 9 à 11, caractérisé par le fait que l'écartement entre les branches (22) de ladite fourche (23) est réglable.
